# EUROPEAN PATENT SPECIFICATION

(11) **EP 1 293 679 B1**
(45) Date of publication and mention of the grant of the patent: **21.12.2005**
(21) Application number: 02078846.9
(22) Date of filing: 16.09.2002
(51) Int. Cl.: F04D 15/02, G01F 23/16

(54) **Pump unit and liquid level switch**
Pumpenanlage mit Niveauschalter
Groupe motopompe avec interrupteur de niveau

(30) Priority: 16.09.2001 NL 1018964
(43) Date of publication of application: 19.03.2003
(73) Proprietor: N.V. Kanters Bedrijven, 3680 Maaseik (BE)
(72) Inventor: Kanters, Martinus Josephus Servatius, 3680 Maaseik (BE)
(74) Representative: Dohmen, Johannes Maria Gerardus

(56) References cited:
- DE-A- 3 134 911
- DE-B- 1 234 041
- DE-U- 29 511 190
- FR-A- 1 480 151
- US-A- 3 070 021
- US-A- 3 466 978
- US-A- 3 906 794

## Description

The invention relates to a pump unit, in particular a submersible pump unit, comprising a liquid level switch for activating the pump under the influence of the level of a liquid which is present in a pit or a reservoir in which the pump is to be disposed.

Such pump units are used on a large scale in practice for pumping out a liquid or substrate which is present in the pit or a reservoir when the level of the liquid or substrate rises above a predetermined value. Applications which are known per se include the use of pump units in outlying areas, where a buffer pit or sewage pit is used in the absence of a sewage system.

In practice a number of techniques are known for detecting the liquid level at which the pump unit must be activated or at which the pump unit can be turned off again.

A first possibility is the use of float switches, which generally comprise an element which floats on the liquid or the substrate in a pit and which is connected to a fixedly disposed (electric) switch for turning the pump unit on and off. When the liquid or the substrate level in the pit rises, the floating element will likewise rises with respect to the fixedly disposed switch, which will eventually result in the switch being activated. When the level drops again as a result of liquid or substrate being pumped from the pit, the floating element will go down, resulting in the switch and the pump unit being deactivated again.

Such float switches, which are known per se in various forms in practice, have the drawback that the floating element is subject to fouling and may be blocked by substances present in the liquid or the substrate, as a result of which the pump unit may not function properly any more or not be activated at all.

Another technique comprises the use of pressure switches responding to fluid pressure, as described inter alia in US patents Nos 3,070,021 and 3,466,978, which pressure switches are disposed outside the pit or the reservoir and to which a tube or a hose is connected, which tube or hose extends above the liquid or the substrate in the pit or the reservoir.

When the liquid level in the pit or the reservoir rises, the air which is present in the tube or the hose will be compressed, causing the pressure switch to be activated. When the liquid level in the pit falls again, also the pressure in the tube or the hose will decrease again, as a result of which the pressure switch will turn off again.

One drawback of this system is the fact that if the liquid level in the pit or the reservoir rises unrestrictedly as a result of a malfunction of the pump unit, liquid may end up in the pressure switch, which may cause damage to the pressure switch and/or may lead to dangerous situations, for example due to short-circuiting in the case of an electric pressure switch.

Furthermore there is the risk of an insufficient amount of air flowing into the tube, resulting in an inadequate pressure build-up when the liquid level in the pit or the reservoir remains at a relatively high level for a prolonged period of time.

Another technique that is known per se makes use of an air pump which discharges a constant flow of air via a tube or a hose which opens near the bottom of the pit. It will be understood that the air pressure in the tube will vary as the liquid or the substrate level in the pit or the reservoir rises. This varying pressure will be detected again by a pressure switch connected to the tube or the hose.

Although the problem of an inadequate pressure build-up in the tube or the hose does not occur with this system, its correct operation is greatly dependent on the operation of the air pump. If the air pump is out of operation as a result of a malfunction, there is a danger of the pump unit not being activated and thus of the pit or the reservoir flooding, with all its adverse consequences.

From German Utility Model application DE 295 11 190 U1 there is known a pump unit of the type mentioned in the preamble of claim 1, which employs a liquid level switch in the form of an elastically deformable body for detecting the liquid level in a pit or a reservoir in which the pump is disposed, as well as a pressure switch which is connected to the body in a fluid-tight manner. Changes in the liquid level in the pit or the reservoir cause the body to deform to a greater or lesser extent, resulting in a detectable change in the pressure in the elastically deformable body and consequently in the pressure that acts on the pressure switch. These pressure changes are used for activating/deactivating the pump. In the embodiments as shown and described the elastically deformable body is disposed in a channel formed in the housing of the pump or in a housing formed by a tube.

A serious drawback of this known pump unit, in particular when used in a buffer pit or sewage pit, is the fact that dirt can easily deposit on the inner wall of the channel in the pump housing or of the separate tubular housing in which the deformable body is disposed, as well as on the body itself. As a result, the movement (expansion) of the body in the channel or the tube will be blocked, so that it seems to the connected pressure switch that the body is constantly under pressure, for example a pressure corresponding to a high water level in the pit or the reservoir. As a result, the pump will remain activated, which has an adverse effect on the life of the pump.

From German patent application No 1 234 041 there is known a pneumatic liquid level indicator comprising an elastically deformable body to which a pressure measuring device is connected. On the upper side, seen from the bottom of a reservoir of which the liquid level is to be determined, the body is covered by a protective cover. As a result of this arrangement, the device is not suitable for use in a buffer pit or the like either, since impurities can easily deposit on the protective cover between the body and the cover, which will lead to limitations as regards the freedom of movement of the body in the long run and thus to incorrect measurements. In particular when used in a sewage pit or a buffer pit, dirt which accumulates between the body and the bottom of the reservoir may interfere with the movement of the deformable body in downward direction, with all the consequences that have been described above in connection with Utility Model application DE 295 11 190 U1.

Consequently it is an object of the invention to provide an improved pump unit, by means of which the drawbacks of the known pump unit as discussed above are eliminated and by means of which a reliable detection of the liquid or the substrate level in a pit or a reservoir is possible, and that for a desired, prolonged period of time.

In order to accomplish that objective, the invention first provides a pump unit, in particular a submersible pump unit, which pump unit comprises a pump including a housing and a driving unit accommodated therein for driving an impeller, a liquid level switch comprising at least one pressure switch responding to fluid pressure for controlling the driving unit, and an elastically deformable body which is connected to the pressure switch in a fluid-tight manner, in which the body is arranged such that it is capable of elastic deformation under the influence of the level of a liquid which is present in a pit or a reservoir in which the pump is to be disposed, and that volume changes of the body will result in fluid pressure changes for controlling the at least one pressure switch, characterized in that the elastically deformable body is freely suspended outside the pump housing, in such a manner that when the pump unit is used in a pit or a reservoir, the elastically deformable body will be in contact with and as much as possible surrounded by a liquid present in the pit or the reservoir.

The invention is based on the insight that the compression of the deformable body and the expansion thereof is hardly influenced, if at all, by accumulation of dirt in the direct vicinity of and on the body itself, as a result of the fact that the elastically deformable body is freely suspended in a pit or a reservoir, in such a manner that it is in contact with the liquid in the pit as much as possible. The fact is that the body is capable of expansion and compression in all directions and that it is in contact with surrounding liquid to the greatest possible extent. This enables the pump unit according to the invention to function unfailingly for a prolonged period of time, whilst less maintenance or fewer service inspections are required in comparison to the prior art.

Various kinds of pressure switches comprising various switching devices for use in combination with electric, electronic, pneumatic or hydraulic operating or control devices can be used for the purpose of the invention.

Since the liquid level switch according to the invention employs a closed, fluid-tight system, the possibility of fluid or substrate finding its way into the pressure switch in the case of a malfunction is excluded, so that there is no risk of penetrating liquid or substrate causing damage to the switch. It will be understood that the risk of malfunctions and the like has thus been eliminated to a great extent.

In a preferred embodiment of the invention, the elastically deformable body is preferably ball-shaped or balloon-shaped. This shape has appeared to be readily compressible, whilst depositions on the body itself will hardly occur.

It is noted that in fact the elastically deformable body may have any desired shape, which shape may be optimally geared to the shape of a pit or a reservoir or to the pump type in question. For reasons of reliability, it is preferred to form the body from one piece of foil.

Since the elastically deformable body is in fact the only element of the liquid level switch used in the pump unit according to the invention that needs to come into contact with the liquid or the substrate, the material from which the body is made can be advantageously selected for its resistance to aggressive liquids, such as ammonia and the like, when used in sewage pits and the like.

Suitable materials for forming the elastically deformable body according to the invention inter alia include PVC, rubber and high-density polyethylene (HDPE) or other flexible, resilient materials and plastics, to which one or more stabilisers may have been added for the purpose of optimising the flexibility and the mechanical strength of the body. In a preferred embodiment of the invention, the elastically deformable body is fixed to the housing of the pump unit. In addition to that, in yet another embodiment of the invention, the elastically deformable body can be fixedly mounted in a pit or a reservoir in which the pump unit is to be disposed.

In an embodiment of the invention, a bracket, in particular a bracket of stainless steel, is provided for attaching the body to the pump, in particular to existing pumps, which bracket is to be separately fixed to the housing of the pump unit and from which the elastically deformable body is freely suspended.

In yet another embodiment of the invention, in order to prevent the deposition of dirt or other tacky substances on the deformable body as much as possible, the elastically deformable body is fitted in such a manner that it will be positioned below the lowermost liquid level in the pit or the reservoir as much as possible in use. As a result, dirt will float on the liquid and/or be suspended in the liquid as much as possible, thus minimising the risk of permanent deposition thereof.

In an embodiment of the pump unit according to the invention, the body is provided with an eye-shaped or loop-shaped projection to enable free suspension thereof. Within the light of the present description of the invention, the term freely suspended as used herein should be understood to mean that the body, for example in the case of a balloon-shaped body, is freely suspended, with the eye facing towards the bottom of a pit or a reservoir, with the eye facing away from the bottom and, if desired, with the eye facing towards or away from (a) side wall(s) of the pit or the reservoir.

In another embodiment of the invention, the elastically deformable body is connected to the at least one pressure switch in a fluid-tight manner via a hose or a tube. In this embodiment, the pressure switch may be mounted at any desired position inside a pit or a reservoir or outside a pit or a reservoir, for example in a control box for activating a pump unit and the like. Preferably, the hose or tube is fixedly connected to the deformable body, whilst being detachably connected to the pressure switch by means of a connecting piece. This embodiment is very interesting for renovation applications of pump units that are already in use.

A pressure switch which is suitable for use with the pump unit according to the invention comprises a fluid-tight chamber provided with an opening for connecting the elastically deformable body as well as a pressure element arranged within the chamber, such as a membrane, for controlling at least one electrical, pneumatic and/or hydraulic switching device or an electronic pressure sensor, such as a piezo element.

In yet another embodiment of the invention, the at least one pressure switch may be designed to comprise several switching devices which are activated and/or deactivated at different fluid pressures being exerted on the pressure element or the membrane, that is, with different values of the increase of the fluid pressure and/or different values of the decrease of the fluid pressure, or different values of the liquid level.

According to the invention, several pressure switches can be connected to the elastically deformable body via a tube or a hose, if desired, for switching at different liquid levels or different fluid pressures, in dependence on the extent to which the volume of the elastically deformable body changes.

In particular in the case of an electronic pressure sensor, the invention provides an electronic processing circuit for measuring and displaying a pressure corresponding to the deformation of the elastically deformable body. The processing circuit may be designed to comprise adjusting means for controlling the driving unit of the pump on the basis of the measured pressure so as to maintain a predetermined liquid level in the pit or the reservoir.

Any suitable gas, in particular air, or any suitable liquid can be selected as the fluid for activating/deactivating the pressure switch. In order to prevent excessive "drifting" of the deformable body in a liquid, the body may be weighted, for example by filling it with sand.

The at least one pressure switch may be disposed in a pit or a reservoir, outside the pit or the reservoir, for example in a control box of the pump unit, or in the housing of the pump unit itself.

In a preferred embodiment of the invention, the driving unit of the pump unit is an electric motor, and the at least one pressure switch comprises at least one electric or electronic switching device.

The invention also relates to a liquid level switch, in particular for use with a pump unit, which liquid level switch comprises at least one pressure switch, which responds to fluid pressure, and an elastically deformable body, which is connected to the pressure switch in a fluid-tight manner as discussed above.

The invention further relates to an elastically deformable body, in particular for use in a pump unit or a liquid level switch as discussed and explained above.

A pump unit and a pumping arrangement suitable for use with the level switch according to the invention are described in Netherlands patent applications Nos 1017184, 1018171 and 1018684 (not pre-published) to the present applicant, which patent applications are to be considered incorporated herein.

The invention will be explained in more detail hereinafter with reference to a drawing, in which:
Figures 1 and 2 schematically show the construction and the operation of the pump unit according to the invention.
Figures 3 and 4 schematically show various embodiments of the liquid level switch according to the invention.
Figure 5 schematically shows an embodiment of an electric pressure switch suitable for use in the invention.
Figure 6 schematically shows a pumping arrangement comprising a pump unit fitted with a liquid level switch according to the invention.

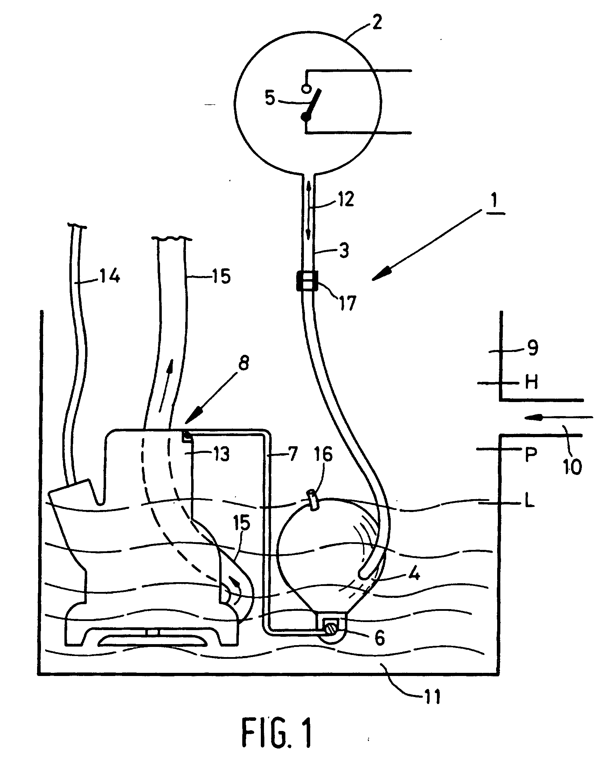

Figure 1 schematically shows a first embodiment of the invention, comprising a liquid level switch 1 including an electric pressure switch 2, which is connected, via a tube or hose 3, to an elastically deformable body 4 in a such manner as to be sealed in a fluid-tight manner to the environment. That is, the body 4, the tube 3 and the pressure switch 2 are isolated from the environment in a fluid-tight manner, thus forming a closed pressure system containing a fluid 12. The fluid 12 is illustrated by means of a double arrow.

In the embodiment as shown, the pressure switch 2 includes an electric switching device in the form of a switch contact 5, which is an electric make-contact in the illustrated example. The body 4 has an eye-shaped or loop-shaped projection 6, by means of which the body is fixedly connected, freely suspended from an approximately L-shaped bracket 7, to the housing 13 of a pump unit 8 in a pit or a reservoir 9 provided with an inlet 10 for a liquid or substrate 11. The pump unit 8 includes a connecting cable 14 for energising a driving unit, and an outlet 15 for discharging liquid or substrate 11 from the pit or the reservoir 9.

The bracket 7, which is made of a corrosion-resistant material such as stainless steel, can be connected to the housing 13 in a usual manner by means of screws or clamps. The body 4 may likewise be fixed to the bracket 7 by means of a screw. Other fixing techniques will be apparent to those skilled in the art.

The elastically deformable body 4 may have any desired shape, for example a ball shape or a balloon shape, as shown. The body 4 may be directly connected to the pressure switch 2, if desired, that is, without the interposition of a tube or a hose 3. For the sake of clarity, no details of the fluid-tight connection between the body 4, the tube 3 and the pressure switch 2 are shown. This connection requires no further explanation for those skilled in the art. Preferably, the tube or the hose is fixed to the body 4 by means of a strong glue near the bottom side thereof, that is, near the eye-shaped or loop-shaped projection 6. The connection to the pressure switch 2 preferably takes place via a detachable connecting piece 17.

The elastically deformable body 4 and the tube or the hose 3 may be made of any suitable material, such as PVC, rubber or high-density polyethylene (HDPE) or other (plastic) materials. Since the body 4 and the tube or the hose 3 are in contact with liquid or substrate 11 which, depending on the use, may contain aggressive constituents, the selection of the material for the body 4 and the tube or the hose 3 may be geared to the degree to which this material is resistant to the substances contained in the liquid on the substrate 11, such as ammonium and other, for example mechanical, constituents. The selection of the material of the body 4 must be made such that the fluid-tightness thereof is guaranteed for a prolonged period of time.

Basically, any suitable gas may be selected as the fluid 12, in the most simple embodiment the fluid 12 is air. It is also possible to use a liquid fluid 12. A valve 16 or the like arranged on the body 4 or also on the tube or the hose 3 may be provided for introducing fluid 12 into the pressure chain. The operation of the pump unit 8 is as follows.

In the situation that is shown in Figure 1, the elastically deformable body 4 is positioned just below the low liquid level L of the liquid 11 in the pit or the reservoir 9, so that no pumping action of the pump unit 8 is required. The body 4, which is clear on all sides, is in contact with the liquid or the substrate 11, and in this situation its volume is such that the pressure of the fluid 12 on the pressure switch 2 in the pressure chain formed by the pressure switch 2, the tube or the hose 3 and the elastically deformable body has a value such that the switch contact 5 is not excited, i.e. that the switch contact is in its open position as shown.

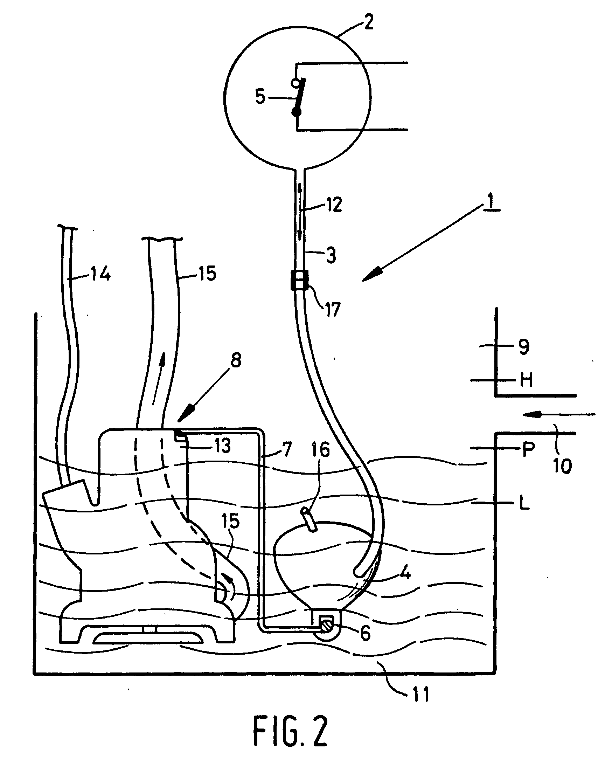

When the liquid level in the pit or the reservoir 9 rises to the level P, at which level the pump must operate so as to pump out liquid or substrate 11 from the pit or the reservoir 9, the so-called "trigger level" as schematically shown in Figure 2, the fixedly disposed body 4 in the pit or the reservoir 9 will be compressed to a greater or lesser extent under the influence of the fluid pressure acting thereon, causing the volume of the body 4 to decrease, which leads to an increase of the pressure of the fluid 12 in the tube or the hose 3 and consequently to a higher fluid pressure acting on the pressure switch 2. As a consequence of the higher fluid pressure, the switch contact 5 will be activated, causing it to close, as is shown in Figure 2.

When subsequently the liquid level in the pit or the reservoir 9 drops to the level L as shown in Figure 1, the body 4 will resume the volume associated therewith, causing the electric switch contact 5 to open.

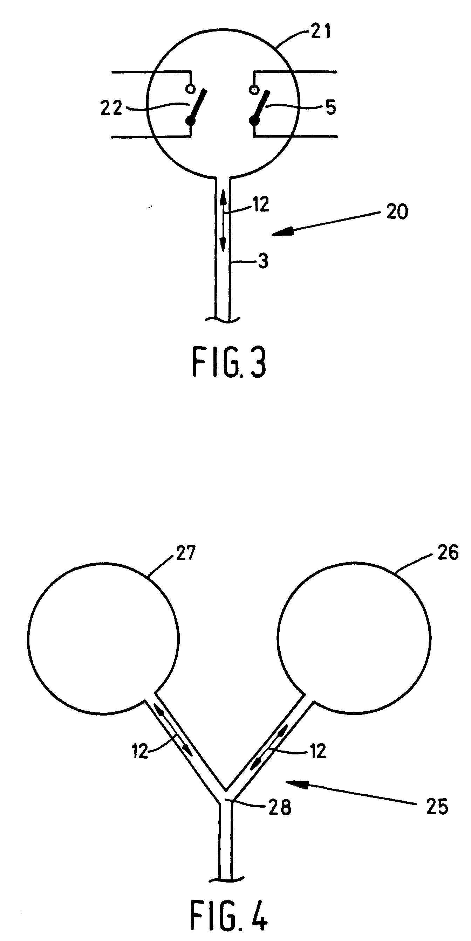

Another embodiment of a liquid level switch 20 according to the invention, as illustrated in part in Figure 3, employs a pressure switch 21 comprising several electric switch contacts, such as a first electric make-contact 5 and a second electric make-contact 22. The two electric contacts 5, 22 may be arranged to switch simultaneously at substantially the same fluid pressure on the pressure switch 10, or the contacts 5, 22 may be arranged to be activated at different fluid pressures. The latter may be necessary, for example, in order to carry out a switching function at different liquid levels P and H of the liquid or the substrate 11 in the pit or the reservoir 9, with level H illustrating a high level at which an alarm is to be generated. The activation of the switch contact 22 may be used for this purpose. As will be appriciated by to those skilled in the art, it is also possible to use electric break-contacts instead of electric make-contacts, or a combination of make-contacts and break-contacts or make-and-break contacts (not shown).

It is also possible to use the embodiment of a liquid level switch 25 according to the invention as shown in Figure 4 for high level signalling, for example, with two or more pressure switches 26, 27 being connected to the elastically deformable body 4 (not shown) via a branched tube or hose 28. The pressure switches 26, 27 may be fitted with one or more make-, break- or make-and-break switching devices and the like for the electric, pneumatic and/or hydraulic switching of chains (not shown).

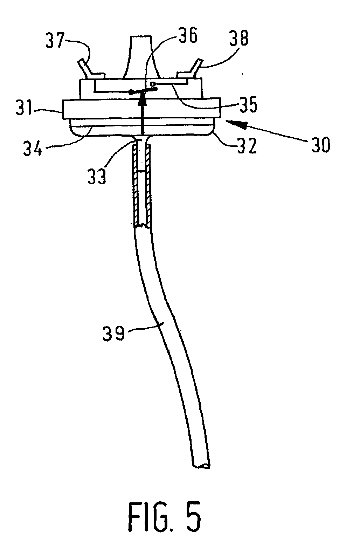

Figure 5 shows an embodiment of an electric pressure switch 30 for use in the liquid level switch according to the invention.

The pressure switch 30 comprises a housing 31 including a fluid-tight chamber 32 provided with an opening 33 to which a tube or a hose 35 connects for connecting the pressure switch 30 to an elastically deformable body 4 (not shown). Disposed in the chamber 32 is a pressure element in the form of a membrane 34, which engages an electric switch 35 in the form of an electric make-contact. This engagement is illustrated by means of an arrow 36. Present on the outer side of the housing are terminal clamps 37 and 38 for the electric switch 35.

Under the influence of an increase in the fluid pressure in the chamber 31, the electric switch 35 is activated via the membrane 34. When the fluid pressure drops, the switch 35 will open again under the influence of a spring force acting thereon (not shown).

Several electric switches may be incorporated in the pressure switch 30, of course, as is illustrated in Figure 3, for example. Furthermore, the pressure switch 30 may be provided with switching contacts in such a manner that the contacts will switch when the pressure in the chamber 32 decreases, that is, when the deformable body 4 resumes its original volume.

It is possible to use an electronic pressure sensor, for example a piezo element (not shown), instead of a pressure switch 30. The piezo element can be arranged in a similar chamber 31 and be connected to an electronic processing circuit (not shown). This makes it possible, among other things, to measure the pressure in the body 4 precisely and relate it to the liquid level in the pit or the reservoir 9, and decide on the basis thereof whether or not to activate the pump unit 8, for example.

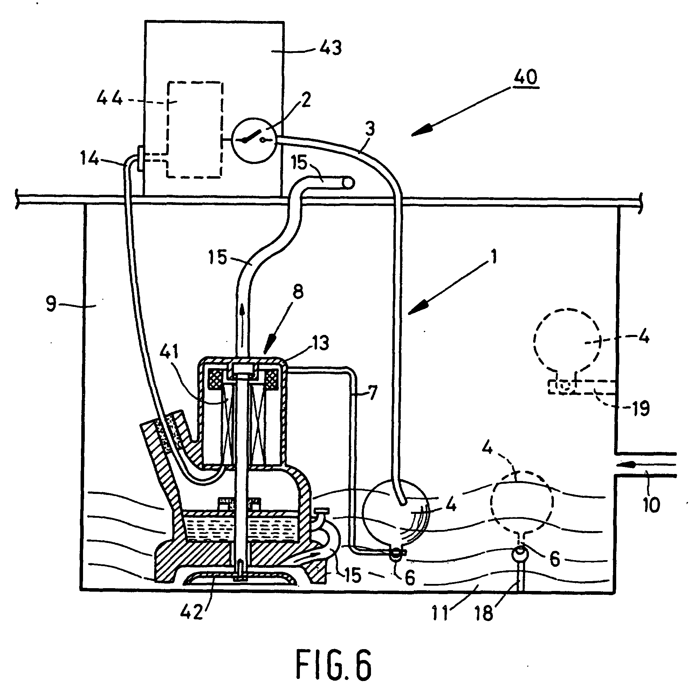

Figure 6 schematically shows an embodiment of a pumping arrangement 40 provided with the liquid level switch 1 according to the invention and a pump unit 8 as shown in Figure 1.

In this embodiment, the pump unit 8 comprises an electric motor 41 and an impeller 42 driven by the electric motor 41. Disposed outside the pit or the reservoir 9 is an electric control box or switchbox 43, in which the pressure switch 2 is present together with other electric switching and control equipment 44 for controlling the operation of the pump unit 8. A control circuit that is suitable for this purpose can be derived from the aforesaid Netherlands patent applications (not pre-published) to the present applicant, which are considered to be incorporated herein.

In further embodiments of the invention, several liquid level switches may be disposed in a pit or a reservoir 9, in which embodiments of the elastically deformable bodies 4 in question may be fixedly mounted at different heights in the pit or the reservoir 9, as is schematically illustrated in broken lines in Figure 6.

Fixing means suitable for this purpose are known per se to those skilled in the art. In this connection stainless steel brackets 19 carrying and body 4 may be considered again, which brackets 19 can be connected to a wall of a pit or a reservoir 9, as is schematically illustrated in broken lines in Figure 6. A body 4 may also be fixed to the bottom of the pit or the reservoir 9, for example by means of an eye hook construction 18.

The pressure switch 2 of the liquid level switch 1 according to the invention may also be mounted in the housing 13 of a pump unit 8. It will be apparent that a very compact unit is obtained in this manner, which unit can readily be placed in a pit or a reservoir 9 as a submersible pump.

Electronic or digital processor-controlled switching means may be mounted in the switchbox 43 for the purpose of controlling the pump unit, if desired, which means may co-operate with an electronic pressure sensor for precisely measuring and displaying the pressure in the body 4 and consequently the liquid level in the pit 9. In this connection, a digital but also an analog readout or display of the pressure or the liquid level in the pit 9 may be considered.

In a practical embodiment of the invention, in particular for use with the pump in a sewage pit, the elastically deformable body 4 has approximately the dimensions of a football. The deformable body is advantageously formed of one piece of foil.

Although the invention has been explained above on the basis of its implementation in a pump unit, it will be apparent to those skilled in the art that the liquid level switch 1 and the deformable body 4 according to the invention can also be used in other implementations, for example for measuring the height of the level of a liquid or substrate in the pit or the reservoir and the like.

## Claims

1. A pump unit, in particular a submersible pump unit, which pump unit (8) comprises a pump including a housing (13) and a driving unit (41) accommodated therein for driving an impeller (42), a liquid level switch (1) comprising at least one pressure switch (2; 21; 26; 27; 30) responding to fluid pressure for controlling said driving unit (41), and an elastically deformable body (4) which is connected to said pressure switch (2; 21; 26; 27; 30) in a fluid-tight manner, wherein said body (4) is arranged such that it is capable of elastic deformation under the influence of the level of a liquid (11) which is present in a pit or a reservoir (9) in which said pump unit (8) is to be disposed, and that volume changes of said body will result in fluid pressure changes for controlling said at least one pressure switch (2; 21; 26; 27; 30), **characterized in that** said elastically deformable body is freely suspended outside said pump housing (13), in such a manner that when said pump unit (8) is used in a pit or a reservoir (9), said elastically deformable body (4) will be in contact with and as much as possible surrounded by a liquid (11) present in said pit or reservoir.

2. A pump unit according to claim 1, wherein said elastically deformable body (4) is ball-shaped or balloon-shaped.

3. A pump unit according to any of the preceding claims, wherein said body is formed of one piece of foil.

4. A pump unit according to any of the preceding claims, wherein said elastically deformable body (4) is formed substantially of a fluid-impermeable, elastically deformable material such as PVC, rubber or HDPE, to which one or more stabilisers may be added, if desired, for the purpose of optimising the flexibility and the mechanical strength of said body.

5. A pump unit according to any of the preceding claims, wherein said elastically deformable body (4) is formed of a material which is resistant to aggressive liquids.

6. A pump unit according to any of the preceding claims, wherein said elastically deformable body (4) is fixed to said housing (13) of said pump unit (8).

7. A pump unit according to claim 6, wherein the elastically deformable body (4) is fixed to said housing of said pump unit by means of a bracket (7) to be mounted separately, in particular a bracket (7) of stainless steel.

8. A pump unit according to claim 7, wherein said bracket (7) is approximately L-shaped and wherein said bracket (7) is fixed to said housing (13) with its long leg, in such a manner that the short leg of said bracket (7) is positioned near the inlet of said housing (13), with said elastically deformable body (4) being freely suspended from said short leg of said bracket (7).

9. A pump unit according to any of the claims 1 - 5, wherein said elastically deformable body (4) is fixedly mounted in a pit or a reservoir (9) in which said pump unit (8) is to be disposed.

10. A pump unit according to any of the preceding claims, wherein said elastically deformable body (4) is fitted in such a manner that it will be positioned, during use, as much as possible below the lowermost liquid level in said pit or reservoir (9).

11. A pump unit according to any of the preceding claims, wherein said elastically deformable body (4) is provided with an eye-shaped or loop-shaped projection (6) so as to enable free suspension thereof.

12. A pump unit according to any of the preceding claims, wherein said elastically deformable body (4) is connected to said at least one pressure switch (2; 21; 26; 27; 30) in a fluid-tight manner via a hose or a tube (3).

13. A pump unit according to claim 12, wherein said hose or tube (3) is fixedly connected to said deformable body (4), and said hose or tube (3) is detachably connected to said at least one pressure switch (2; 21; 26; 27; 30) by means of a connecting piece (17).

14. A pump unit according to any of the preceding claims, wherein said at least one pressure switch (2; 21; 26; 27; 30) comprises at least one electrical (5; 22; 35), pneumatic or hydraulic switching device.

15. A pump unit according to claim 14, wherein said pressure switch (30) comprises a fluid-tight chamber (32) provided with an opening (33) for connecting said elastically deformable body (4) as well as a pressure element arranged within said chamber (32), such as a membrane (34), for controlling said at least one switching device (35).

16. A pump unit according to claim 14 or 15, wherein said pressure switch (30) comprises several switching devices which are so arranged that one or more of said various switching (35) devices will be activated under the influence of different fluid pressures.

17. A pump unit according to claim 16, wherein one or more of said switching devices (35) are arranged to be activated in the case of an increase and/or a decrease of the fluid pressure.

18. A pump unit according to any of the claims 1 - 13, wherein said at least one pressure switch (2; 21; 26; 27; 30) comprises at least one electronic switching device.

19. A pump unit according to claim 18, wherein said pressure switch (2; 21; 26; 27; 30) comprises a fluid-tight chamber provided with an opening for connecting said elastically deformable body (4) as well as a pressure sensor arranged within said chamber.

20. A pump unit according to claim 18 or 19, comprising an electronic processing circuit (44) for measuring and displaying a pressure corresponding to the deformation of said elastically deformable body (4).

21. A pump unit according to claim 20, wherein said processing circuit (44) comprises adjusting means for controlling said driving unit (41) of said pump on the basis of the measured pressure so as to maintain a predetermined liquid level in said pit or reservoir (9).

22. A pump unit according to any of the preceding claims, wherein said fluid for activating said at least one pressure switch (2; 21; 26; 27; 30) comprises a gas, in particular air.

23. A pump unit according to any of the claims 1 - 21, wherein said fluid for activating said at least one pressure switch (2; 21; 26; 27; 30) comprises a liquid.

24. A pump unit according to any of the preceding claims, wherein said at least one pressure switch (2; 21; 26; 27; 30) is accommodated in a control box (43) to be connected to said pump unit.

25. A pump unit according to any of the claims 1 - 23, wherein said at least one pressure switch is accommodated in said housing (13) of said pump unit (8).

26. A pump unit according to any of the preceding claims, wherein said driving unit comprises an electric motor (41), and wherein said at least one pressure switch (2; 21; 26; 27; 30) comprises at least one electric or electronic switching device.

## Patentansprüche

1. Pumpeneinheit, insbesondere eine Tauchpumpeneinheit, wobei die Pumpeneinheit (8) eine Pumpe mit einem Gehäuse (13) und einer darin untergebrachten Antriebseinheit (41) zum Antrieb eines Flügelrads (42), einen Flüssigkeitsstandsschalter (1) mit mindestens einem auf Fluiddruck reaglerenden Druckschalter (2; 21; 26; 27; 30) zur Ansteuerung der genannten Antriebseinheit (41) und einen mit dem genannten Druckschalter (2; 21; 26; 27; 30) fluiddicht verbundenen elastisch verformbaren Körper (4) umfaßt, wobei der genannte Körper (4) so angeordnet ist, daß er sich unter dem Einfluß des Füllstands einer Flüssigkeit (11), welche in einer Grube oder in einem Sammelbecken (9), in der bzw, dem die genannte Pumpeneinheit (8) angeordnet werden soll, elastisch verformen kann und daß Volumenänderungen des genannten Körpers zu Änderungen im Fluiddruck führen zur Ansteuerung des genannten mindestens einen Druckschalters (2; 21; 26; 27; 30), **dadurch gekennzeichnet, daß** der genannte elastisch verformbare Körper außerhalb des Pumpengehäuses (13) frei aufgehängt ist auf eine Weise, daß beim Einsatz der genannten Pumpeneinheit (8) in einer Grube oder einem Sammelbecken (9) der genannte elastisch verformbare Körper (4) im Kontakt mit einer in der Grube oder dem Sammelbecken vorhandenen Flüssigkeit (11) ist und so weit wie möglich von dieser umgeben ist.

2. Pumpeneinheit gemäß Anspruch I, bei der der genannte elastisch verformbare Körper (4) kugelförmig oder ballonförmig ist.

3. Pumpeneinheit gemäß einem der vorstehenden Ansprüche, bei der der genannte Körper aus einer einteiligen Folie geformt ist.

4. Pumpeneinheit gemäß einem der vorstehenden Ansprüche, bei der der genannte elastisch verformbare Körper (4) im wesentlichen aus einem fluidundurchlässigen, elastisch verformbaren Material wie PVC, Kautschuk oder HDPE geformt ist, zu dem, falls gewünscht, ein oder mehrere Stabilisatoren zugefügt werden können, um die Flexibilität und mechanische Stärke des genannten Körpers zu optimieren.

5. Pumpeneinheit gemäß einem der vorstehenden Ansprüche, bei der der genannte elastisch verformbare Körper (4) aus einem Material geformt ist, welches gegenüber aggressiven Flüssigkeiten beständig ist.

6. Pumpeneinheit gemäß einem der vorstehenden Ansprüche, bei dem der genannte elastisch verformbare Körper (4) an dem genannten Gehäuse (13) der genannten Pumpeneinheit (8) befestigt ist.

7. Pumpeneinheit gemäß Anspruch 6, bei der der elastisch verformbare Körper (4) mittels eines separat zu befestigenden Halters (7), insbesondere eines Halters (7) aus Edelstahl, an dem genannten Gehäuse der genannten Pumpeneinheit befestigt ist.

8. Pumpeneinheit gemäß Anspruch 7, bei der der genannte Halter (7) näherungsweise L-förmig ist und bei der der genannte Halter (7) an dem genannten Gehäuse (13) mit seinem langen Schenkel so befestigt ist, daß der kurze Schenkel des genannten Halters (7) in der Nähe des Einlasses des genannten Gehäuses (13) positioniert ist, wobei der genannte elastisch verformbare Körper (4) an dem genannten kurzen Schenkel des genannten Halters (7) frei aufgehängt ist.

9. Pumpeneinheit gemäß einem der Ansprüche 1 bis 5, bei der der genannte elastisch verformbare Körper (4) ortsfest in einer Grube oder einem Sammelbecken (9) befestigt ist, in welcher bzw. welchem die genannte Pumpeneinheit (8) angeordnet werden soll.

10. Pumpeneinheit gemäß einem der vorstehenden Ansprüche, bei der der genannte elastisch verformbare Körper (4) so angebracht ist, daß er im Gebrauch so weit wie möglich unterhalb des untersten Flüssigkeitsstands in der genannten Grube oder dem genannten Sammelbecken (9) angeordnet ist.

11. Pumpeneinheit gemäß einem der vorstehenden Ansprüche, bei der der genannte elastisch verformbare Körper (4) mit einem ösenförmigen oder schlaufenförmigen Vorsprung (6) versehen ist, an dem er frei aufgehängt werden kann.

12. Pumpeneinheit gemäß einem der vorstehenden Ansprüche, bei der der genannte elastisch verformbare Körper (4) mittels eines Schlauchs oder Rohrs (3) fluiddicht mit dem genannten mindestens einen Druckschalter (2; 21; 26, 27; 30) verbunden ist.

13. Pumpeneinheit gemäß Anspruch 12, bei der der genannte Schlauch oder das genannte Rohr (3) fest mit dem genannten elastisch verformbaren Körper (4) verbunden ist und der genannte Schlauch oder das genannte Rohr (3) mittels eines Anschlußstücks (17) abnehmbar mit dem mindestens einen Druckschalter (2; 21; 26; 27; 30) verbunden ist.

14. Pumpeneinheit gemäß einem der vorstehenden Ansprüche, bei der der genannte mindestens eine Druckschalter (2; 21; 26; 27; 30) mindestens ein elektrisches (5; 22; 35), pneumatisches oder hydraulisches Schaltgerät umfaßt.

15. Pumpeneinheit gemäß Anspruch 14, bei der der genannte Druckschalter (30) eine fluiddichte Kammer (32) mit einer Öffnung (33) zur Verbindung mit dem genannten elastisch verformbaren Körper (4) sowie ein in der genannten Kammer (32) angeordnetes Druckelement wie eine Membran (34) umfaßt zur Ansteuerung des genannten mindestens einen Schaltgeräts (35).

16. Pumpeneinheit gemäß Anspruch 14 oder 15, bel der der genannte Druckschalter (30) mehrere Schaltgeräte umfaßt, die so angeordnet sind, daß ein oder mehrere der genannten verschiedenen Schaltgeräte (35) unter dem Einfluß verschiedener Fluiddrücke aktiviert werden.

17. Pumpeneinheit gemäß Anspruch 16, bei der ein oder mehrere Schaltgeräte (35) so angeordnet sind, daß sie im Fall eines Anstiegs und/oder eines Rückgangs des Fluiddrucks aktiviert werden.

18. , Pumpeneinheit gemäß einem der Ansprüche 1 bis 13, bei der der genannte mindestens eine Druckschalter (2; 21; 26: 27; 30) mindestens ein elektronisches Schaltgerät umfaßt.

19. Pumpeneinheit gemäß Anspruch 18, bei der der genannte Druckschalter (2; 21; 26; 27; 30) eine fluiddichte Kammer mit einer Öffnung zur Verbindung mit dem genannten elastisch verformbaren Körper (4) sowie einen in der genannten Kammer angeordneten Drucksensor umfaßt.

20. Pumpeneinheit gemäß Anspruch 18 oder 19, umfassend einen elektronischen Verarbeitungsschaltkreis (44) für die Messung und Anzeige eines Drucks, der der Verformung des genannten elastisch verformbaren Körpers (4) entspricht.

21. Pumpeneinheit gemäß Anspruch 20, bel der der genannte Verarbeitungsschaltkreis (44) Einstellmittel zur Ansteuerung der genannten Antriebseinheit (41) der genannten Pumpe auf der Grundlage des gemessenen Drucks umfaßt, um einen festgelegten Flüssigkeitsstand in der genannten Grube oder dem genannten Sammelbecken (9) aufrechtzuerhalten.

22. Pumpeneinheit gemäß einem der vorstehenden Ansprüche, bei der das genannte Fluid zur Aktivierung des genannten mindestens einen Druckschalters (2; 21; 26; 27; 30) ein Gas, insbesondere Luft, umfaßt.

23. Pumpeneinheit gemäß einem der Ansprüche 1 bis 21, bei dem das genannte Fluid zur Aktivierung des genannten mindestens einen Druckschalters (2; 21; 26; 27; 30) eine Flüssigkeit umfaßt.

24. Pumpeneinheit gemäß einem der vorstehenden Ansprüche, bel der der genannte mindestens eine Druckschalter (2; 21; 26; 27; 30) in einem Steuerkasten (43), der mit der genannten Pumpeneinheit verbunden wird, untergebracht ist.

25. Pumpeneinheit gemäß einem der Ansprüche 1 bis 23, bei der der genannte mindestens eine Druckschalter in dem genannten Gehäuse (13) der genannten Pumpeneinheit (8) untergebracht ist.

26. Pumpeneinheit gemäß einem der vorstehenden Ansprüche, bei der die genannte Antriebseinheit einen Elektromotor (41) umfaßt und bei der der genannte mindestens eine Druckschalter (2; 21; 26; 27: 30) mindestens ein elektrisches oder elektronische Schaltgerät umfaßt.

## Revendications

1. Groupe moto-pompe, notamment groupe moto-pompe submersible, lequel groupe moto-pompe (8) comprend une pompe comprenant un logement (13) et une unité d'entraînement (41) logée dans celui-ci pour entraîner une roue (42), un commutateur de niveau de liquide (1) comprenant au moins un pressostat (2 ; 21 ; 26 ; 27 ; 30) répondant à la pression d'un fluide pour commander ladite unité d'entraînement (41), et un corps élastiquement déformable (4) qui est connecté audit pressostat (2 ; 21 ; 26 ; 27 ; 30) de manière étanche aux fluides, dans lequel ledit corps (4) est agencé de sorte qu'il est capable de déformation élastique sous l'influence du niveau d'un liquide (11) qui est présent dans une fosse ou un réservoir (9) dans lequel/laquelle ledit groupe moto-pompe (8) doit être disposé, et que des changements volumiques dudit corps conduiront à des changements de pression de fluide pour commander ledit au moins un pressostat (2 ; 21 ; 26 ; 27 ; 30), **caractérisé en ce que** ledit corps élastiquement déformable est librement suspendu à l'extérieur dudit logement de pompe (13) d'une manière telle que lorsque ledit groupe moto-pompe (8) est utilisé dans une fosse ou un réservoir (9), ledit corps élastiquement déformable (4) sera en contact avec et autant que possible entouré par un liquide (11) présent dans ladite fosse ou ledit réservoir.

2. Groupe moto-pompe selon la revendication 1, dans lequel ledit corps élastiquement déformable (4) est en forme de balle ou en forme de ballon.

3. Groupe moto-pompe selon l'une quelconque des revendications précédentes, dans lequel ledit corps est formé d'un morceau de feuille.

4. Groupe moto-pompe selon l'une quelconque des revendications précédentes, dans lequel ledit corps élastiquement déformable (4) est essentiellement formé d'un matériau imperméable aux fluides, élastiquement déformable, tel que le PVC, le caoutchouc ou le HDPE, auquel un ou plusieurs stabilisants peuvent être ajoutés, le cas échéant, aux fins d'optimiser la souplesse et la résistance mécanique dudit corps.

5. Groupe moto-pompe selon l'une quelconque des revendications précédentes, dans lequel ledit corps élastiquement déformable (4) est formé d'un matériau qui est résistant aux liquides agressifs.

6. Groupe moto-pompe selon l'une quelconque des revendications précédentes, dans lequel ledit corps élastiquement déformable (4) est fixé audit logement (13) dudit groupe moto-pompe (8).

7. Groupe moto-pompe selon la revendication 6, dans lequel le corps élastiquement déformable (4) est fixé audit logement dudit groupe moto-pompe au moyen d'un support (7) devant être monté séparément, notamment d'un support (7) en acier inoxydable.

8. Groupe moto-pompe selon la revendication 7, dans lequel ledit support (7) est approximativement en forme de L et dans lequel ledit support (7) est fixé audit logement (13) avec sa jambe longue d'une manière telle que la jambe courte dudit support (7) est positionnée près de l'entrée dudit logement (13), ledit corps élastiquement déformable (4) étant librement suspendu depuis ladite jambe courte dudit support (7).

9. Groupe moto-pompe selon l'une quelconque des revendications 1 à 5, dans lequel ledit corps élastiquement déformable (4) est monté à demeure dans une fosse ou un réservoir (9) dans lequel/laquelle ledit groupe moto-pompe (8) doit être disposé.

10. Groupe moto-pompe selon l'une quelconque des revendications précédentes, dans lequel ledit corps élastiquement déformable (4) est ajusté d'une manière telle qu'il sera positionné, au cours de son utilisation, autant que possible en dessous du niveau de liquide le plus bas dans ladite fosse ou ledit réservoir (9).

11. Groupe moto-pompe selon l'une quelconque des revendications précédentes, dans lequel ledit corps élastiquement déformable (4) est pourvu d'une saillie (6) en forme d'oeil ou en forme de boucle de manière à permettre la suspension libre de celui-ci.

12. Groupe moto-pompe selon l'une quelconque des revendications précédentes, dans lequel ledit corps élastiquement déformable (4) est connecté audit au moins un pressostat (2 ; 21 ; 26 ; 27 ; 30) d'une manière étanche aux fluides par l'intermédiaire d'un tuyau ou d'un tube (3) .

13. Groupe moto-pompe selon la revendication 12, dans lequel ledit tuyau ou tube (3) est connecté à demeure audit corps déformable (4) et ledit tuyau ou tube (3) est connecté de manière amovible audit au moins un pressostat (2 ; 21 ; 26 ; 27 ; 30) au moyen d'un élément de connexion (17) .

14. Groupe moto-pompe selon l'une quelconque des revendications précédentes, dans lequel ledit au moins un pressostat (2 ; 21 ; 26 ; 27 ; 30) comprend au moins un dispositif de commutation électrique (5 ; 22 ; 35), pneumatique ou hydraulique.

15. Groupe moto-pompe selon la revendication 14, dans lequel ledit pressostat (30) comprend une chambre étanche aux fluides (32) pourvue d'une ouverture (33) pour la connexion dudit corps élastiquement déformable (4) ainsi qu'un élément de pression agencé au sein de ladite chambre (32), tel qu'une membrane (34), pour commander ledit au moins un dispositif de commutation (35).

16. Groupe moto-pompe selon la revendication 14 ou 15, dans lequel ledit pressostat (30) comprend plusieurs dispositifs de commutation qui sont agencés de sorte qu'un ou plusieurs desdits divers dispositifs de commutation (35) seront activés sous l'influence de différentes pressions de fluide.

17. Groupe moto-pompe selon la revendication 16, dans lequel un ou plusieurs desdits dispositifs de commutation (35) sont agencés pour être activés en cas d'augmentation et/ou de diminution de la pression de fluide.

18. Groupe moto-pompe selon l'une quelconque des revendications 1 à 13, dans lequel ledit au moins un pressostat (2 ; 21 ; 26 ; 27 ; 30) comprend au moins un dispositif de commutation électronique.

19. Groupe moto-pompe selon la revendication 18, dans lequel ledit pressostat (2 ; 21 ; 26 ; 27 ; 30) comprend une chambre étanche aux fluides pourvue d'une ouverture pour la connexion dudit corps élastiquement déformable (4) ainsi qu'un capteur de pression agencé au sein de ladite chambre.

20. Groupe moto-pompe selon la revendication 18 ou 19, comprenant un circuit de traitement électronique (44) pour la mesure et l'affichage d'une pression correspondant à la déformation dudit corps élastiquement déformable (4).

21. Groupe moto-pompe selon la revendication 20, dans lequel ledit circuit de traitement (44) comprend des moyens d'ajustement pour commander ladite unité d'entraînement (41) de ladite pompe en fonction de la pression mesurée de manière à maintenir un niveau de liquide prédéterminé dans ladite fosse ou ledit réservoir (9).

22. Groupe moto-pompe selon l'une quelconque des revendications précédentes, dans lequel ledit fluide pour l'activation dudit au moins un pressostat (2 ; 21 ; 26 ; 27 ; 30) comprend un gaz, notamment de l'air.

23. Groupe moto-pompe selon l'une quelconque des revendications 1 à 21, dans lequel ledit fluide pour l'activation dudit au moins un pressostat (2 ; 21 ; 26 ; 27 ; 30) comprend un liquide.

24. Groupe moto-pompe selon l'une quelconque des revendications précédentes, dans lequel ledit au moins un pressostat (2 ; 21 ; 26 ; 27 ; 30) est logé dans une boîte de commande (43) devant être connectée audit groupe moto-pompe.

25. Groupe moto-pompe selon l'une quelconque des revendications 1 à 23, dans lequel ledit au moins un pressostat est logé dans ledit logement (13) dudit groupe moto-pompe (8).

26. Groupe moto-pompe selon l'une quelconque des revendications précédentes, dans lequel ladite unité d'entraînement comprend un moteur électrique (41) et dans lequel ledit au moins un pressostat (2 ; 21 ; 26 ; 27 ; 30) comprend au moins un dispositif de commutation électrique ou électronique.
